# EUROPÄISCHE PATENTSCHRIFT

(11) **EP 4 237 270 B1**
(45) Veröffentlichungstag und Bekanntmachung des Hinweises auf die Patenterteilung: **09.12.2026**
(21) Anmeldenummer: 21805369.2
(22) Anmeldetag: 22.10.2021
(51) Int. Cl.: B60K 35/10, B60K 35/21, B60K 35/22, B60K 35/28, B60K 35/29, B60K 35/60, G06F 3/01, G06V 20/59, B60K 35/215, B60K 35/26, B60K 35/65

(54) **ANZEIGEVORRICHTUNG FÜR EIN FAHRZEUG**
DISPLAY DEVICE FOR A VEHICLE
DISPOSITIF D'AFFICHAGE POUR UN VÉHICULE

(30) Priorität: 02.11.2020 DE 102020213770
(43) Veröffentlichungstag der Anmeldung: 06.09.2023
(73) Patentinhaber: AUMOVIO Germany GmbH, 60488 Frankfurt am Main (DE)
(72) Erfinder: ROTHENHÄUSLER, Konrad, 60488 Frankfurt am Main (DE); SCHARFENBERGER, Christian, 60488 Frankfurt am Main (DE)
(74) Vertreter: Aumovio Corporation
(86) Internationale Anmeldenummer: PCT/DE2021/200162
(87) Internationale Veröffentlichungsnummer: WO 2022/089696

(56) Entgegenhaltungen:
- EP-A2- 1 562 102
- US-A1- 2013 307 771
- US-A1- 2015 185 834
- US-A1- 2020 013 225
- US-B2- 9 096 129
- US-B2- 9 383 579
- US-B2- 9 696 799

## Beschreibung

Die vorliegende Erfindung betrifft eine Anzeigevorrichtung für ein Fahrzeug aufweisend eine elektrooptische Anzeige und eine Positionserkennungsvorrichtung, mittels derer die Position der Augen eines Fahrers des Fahrzeugs ermittelbar ist, wobei mittels der elektrooptischen Anzeigevorrichtung eine Vielzahl von verschiedenen Informationen darstellbar und von dem Fahrer des Fahrzeugs wahrnehmbar sind. Aus dem Stand der Technik sind derartige elektrooptische Anzeigen bekannt, die eine Vielzahl von Informationen wie beispielsweise Betriebsparameter des Fahrzeuges und andere Informationen anzeigen. Beispielsweise betrifft die US 9 696 799 B2 betrifft eine Informationsanzeigevorrichtung, die eine große Anzahl von Informationen unterschiedlicher Art auf einem Bildschirm anordnet und anzeigt. Die US 9 383 579 B2 betrifft ein Anzeigesystem, insbesondere ein adaptives Anzeigesystem, das mindestens eine Anzeigekomponente umfasst, sowie ein Verfahren zur Steuerung einer visuellen Ausgabe der mindestens einen Anzeigekomponente auf der Grundlage einer Blickverfolgung eines Benutzers. Die US 2020/013225 A1 betrifft ein Verfahren zur Ausgabe von Fahrzeug-Außeninformationen, insbesondere ein Verfahren zum Erfassen von Fahrzeug-Außeninformationen und zum Bereitstellen der Fahrzeug-Außeninformationen unter Verwendung von Augmented Reality sowie eine Vorrichtung dafür. Die US 9 096 129 B2 betrifft Verfahren und Systeme zum Anzeigen von Informationen und insbesondere Verfahren und Systeme zum Anzeigen von Informationen, die von Maschinenbedienern in einer Weise betrachtet werden können, die das Betrachten der Informationen erleichtert. Die Positionserkennungsvorrichtung, mittels derer die Position der Augen eines Fahrers des Fahrzeugs ermittelbar ist wird beispielsweise zur Überwachung des Zustandes des Fahrers des Fahrzeuges zu ermitteln und beispielsweise den Fahrer vor einem Einschlafen warnen zu können. Aus der US 2013/307771 A1 sind beispielsweise Verfahren und Vorrichtungen bekannt, welche Blickinformationen eines Benutzers verwenden, um einen Kontext und einen Interaktionssatz für den Benutzer auszuwählen. Die US 2015/185834 A1 beschreibt ein System und Verfahren zur Blickverfolgung. Die EP 1 562 102 A2 betrifft ein Kraftfahrzeug umfassend Symbolflächen mit jeweils einem eine kfz-seitig ausführbare Funktion darstellenden Symbol oder dergleichen im Sichtbereich des Fahrers, eine Einrichtung zur Erfassung der Blickrichtung des Fahrers bezüglich der Symbolflächen, zur Bestimmung einer betrachteten Symbolfläche und zur Auslösung der einer Symbolfläche zugeordneten Funktion in Abhängigkeit des Erfassungsergebnisses sowie eine Bestätigungseinrichtung für die Blickauswahl. Die Vielzahl der Informationen kann die Aufnahmemöglichkeit der Informationen durch den Fahrer einschränken. Aufgabe der Erfindung ist es daher, die Wahrnehmbarkeit der auf der elektrooptischen Anzeige dargestellten Informationen zu verbessern. Diese Aufgabe wird durch eine Anzeigevorrichtung nach Patentanspruch 1 und ein Verfahren nach Patentanspruch 9 erreicht. Vorteilhafte Ausgestaltungen der Erfindung sind den Unteransprüchen zu entnehmen.

Dadurch, dass durch die erfindungsgemäße Anzeigevorrichtung in Abhängigkeit der wahrgenommenen Information die von dem Fahrer wahrgenommene Information vergrößerbar und /oder Zusatzinformationen zu der wahrgenommenen Information darstellbar sind und bei dem erfindungsgemäßen Verfahren die Blickrichtung des Fahrers ermittelt wird und bestimmt wird, welche Information der verschiedenen Informationen von dem Fahrer wahrgenommen wird und dass in Abhängigkeit der wahrgenommenen Information die wahrgenommene Information vergrößert und /oder Zusatzinformationen zu der wahrgenommenen Information dargestellt werden wird erreicht, dass der Fahrer die ihn hauptsächlich interessierende Information besser wahrnehmbar dargestellt wird. So kann beispielsweise bei einem erkannten Blick auf die Tankanzeige diese vergrößert dargestellt werden. Auch ist es möglich, von einer analogen Zeigerdarstellung zu einer digitalen Anzeige zu wechseln. Es ist aber auch möglich, die Darstellung nur zu vergrößern und beispielsweise in dem mittleren Bereich der Anzeigevorrichtung anzuzeigen. Auch ist es möglich, Zusatzinformationen zu der dargestellten Information darzustellen. So kann beispielsweise beim Blick auf die Tankanzeige die Tankanzeige vergrößert dargestellt werden und zusätzlich die erzielbare Reichweite des Fahrzeuges mit dem aktuellen Tankinhalt dargestellt werden. Hierbei kann auch unterschieden werden, ob das Fahrzeug mit der aktuellen Geschwindigkeit weiterbetrieben wird oder es können auch zusätzlich Reichweiten für geänderte Geschwindigkeiten angegeben werden. Weiterhin kann bei einer vorliegenden Information über die nächst gelegene Tankstelle diese Information angezeigt werden. Beim Blick auf ein Tachometer kann zum Beispiel auch ein Hinweis auf die erlaubte Höchstgeschwindigkeit des aktuell befahrenen Streckenabschnitts angezeigt werden und beim Überschreiten der erlaubten Höchstgeschwindigkeit eine Warnung ausgegeben werden.

Dadurch, dass die Darstellung der Informationen durch die Anzeigevorrichtung so verschiebbar und in der Größe veränderbar sind, dass keine Informationen durch ein Bauteil des Fahrzeugs für den Fahrer verdeckt sind wird erreicht, dass der Fahrer alle wesentlichen Informationen wahrnehmen kann ohne seine Kopfposition zu verändern und somit nicht mehr als nötig vom Führen des Fahrzeugs abgelenkt wird. So kann die Lage der dargestellten Informationen so gewählt werden, dass beispielsweise das Lenkrad des Fahrzeugs keine Information für den Fahrer verdeckt.

Wenn die Anzeigevorrichtung eine zweite elektrooptische Anzeige aufweist und Zusatz-informationen auf der zweiten elektrooptischen Anzeige darstellbar sind kann die Sicherheit des Fahrzeuges erhöht werden.

Erfindungsgemäß weist die Anzeigevorrichtung eine zweite elektrooptische Anzeige auf, wobei die zweite elektrooptische Anzeige auf einer A-Säule des Fahrzeugs angeordnet ist. Dadurch kann sie besonders einfach ohne allzu lange Blickabwendung von der Fahrbahn wahrgenommen werden.

Erfindungsgemäß ist die zweite elektrooptische Anzeige (400) auf einer A-Säule des Fahrzeuges angeordnet und die Umgebung hinter der A-Säule des Fahrzeugs darstellbar. Dadurch sind auch kleinere Lebewesen und Gegenstände benachbart zu dem Fahrzeug gut wahrnehmbar.

Dadurch, dass die Blickrichtungserkennung erfindungsgemäß in der A-Säule des Fahrzeuges angeordnet ist kann die Blickrichtung des Fahrers gut ermittelt werden.

Sofern die Anzeigevorrichtung eine Sprachausgabeeinheit aufweist oder mit einer Sprachausgabeeinheit verbunden ist können Informationen noch sicherer an den Fahrer übermittelt werden.

Diese Sprachausgabe kann beispielsweise durch eine Blickgeste des Fahrers eingeschaltet und/oder ausgeschaltet werden.

Wenn bei einer Darstellung einer Tankanzeige die Reichweite der Tankfüllung für die aktuelle Fahrweise angezeigt wird hat der Fahrer eine aussagekräftigere Information, als wenn ihm nur der Tankinhalt angezeigt wird.

Falls die Reichweite der Tankfüllung für mindestens eine alternative Fahrweise angezeigt wird kann der Kraftfahrer besser entscheiden, für welche Fahrweise er sich entscheidet.

Die Informationen sind besonders gut wahrnehmbar, wenn die Darstellung der Informationen so verschoben und in der Größe verändert werden, dass keine dargestellten Informationen durch ein Bauteil des Fahrzeugs für den Fahrer verdeckt sind.

Die Erfindung wird nachfolgend anhand der Figuren für besonders bevorzugte Ausführungsbeispiele näher erläutert.

Es zeigen:
Figur 1 den Blick in das Innere eines Fahrzeugs mit einem Ausführungsbespiel einer Anzeigevorrichtung und einen Fahrer des Fahrzeugs
Figur 2 eine Ansicht der Darstellung auf der elektrooptischen Anzeige mit mehreren dargestellten Informationen
Figur 3 eine Ansicht der Darstellung auf der elektrooptischen Anzeige, wenn der Fahrer auf die Tankanzeige blickt

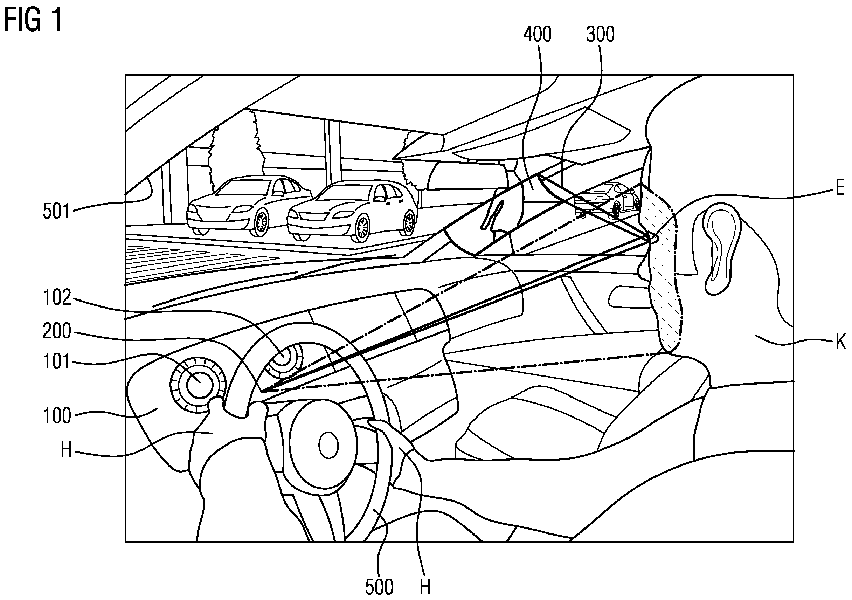

In Figur 1 erkennt man von einem Fahrzeug eine elektrooptische Anzeige 100 mit auf der elektrooptischen Anzeige 100 dargestellten Tachometer 101 und Drehzahlmesser 102, eine Blickrichtungserkennung 200, eine A-Säule 300, eine zweite elektrooptische Anzeige 400, ein Lenkrad 500 und eine Windschutzscheibe 501. Von einem Fahrer des Fahrzeugs sind ein Kopf K mit einem Auge E und zwei Händen H zu erkennen. Die Blickrichtungserkennung 200 erfasst die Blickrichtung und die Position der Augen E des Fahrers und steuert entsprechend die Darstellung auf der elektrooptischen Anzeige 100 und der zweiten elektrooptischen Anzeige 400. Über eine nicht näher beschriebene Vorrichtung wird die Umgebung des Fahrzeuges aufgenommen und der Ausschnitt der Umgebung, die sich für den Fahrer hinter der zweiten elektrooptischen Anzeige 400 befindet, auf der elektrooptischen Anzeige 400 dargestellt, so dass der Fahrer quasi durch die A-Säule hindurchsehen kann. Diese deckungsgleiche Darstellung ist durch die Erfassung der Augenposition und Blickrichtung durch die Blickrichtungserkennung 200 möglich. Die Blickrichtungserkennung 200 ist im dargestellten Ausführungsbeispiel in einer Ausnehmung oder transparenten Stelle der elektrooptischen Anzeige 200 angeordnet, kann aber auch beabstandet zu der elektrooptischen Anzeige 100 angeordnet sein.

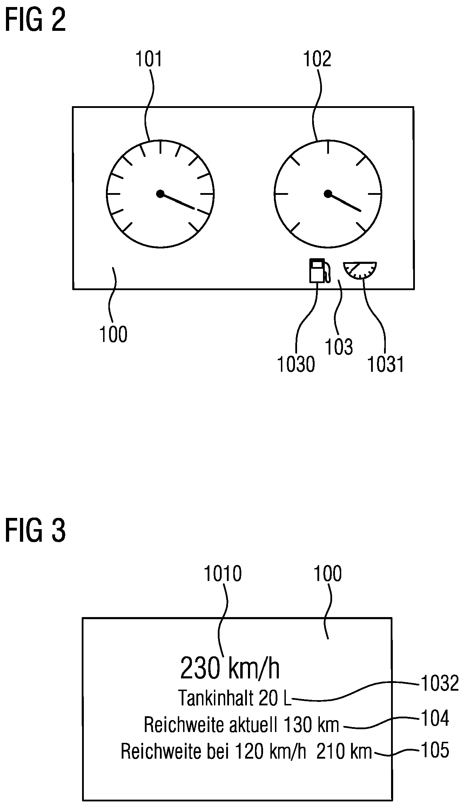

In Figur 2 erkennt man eine Ansicht der Darstellung auf der elektrooptischen Anzeige 100 mit mehreren dargestellten Informationen, wenn der Fahrer nicht auf die elektrooptische Anzeige 100 blickt. Es werden ein Tachometer 101 und ein Drehzahlmesser 102 als analoges Zeigerinstrument und eine Tankanzeige 103 mit Piktogramm 1030 und analoger Tankanzeige 1031 als analoges Zeigerinstrument dargestellt. Die dargestellten Informationen sind nicht abschließend und nur beispielhaft zu sehen. In einer realen Anzeigevorrichtung mit elektrooptischen Display 100 können gleichzeitig noch weitere Informationen wie weitere Betriebsparameter des Fahrzeugs und / oder Umweltbedingungen angezeigt werden . Wenn die Blickrichtungserkennung 200 nun erkennt, dass der Fahrer die Tankanzeige 103 betrachtet, wird die Darstellung der elektrooptischen Anzeige 100 so verändert, wie sie in Figur 3 dargestellt wird.

Man erkennt in Figur 3 ein digitales Tachometer 1010, eine digitale Tankanzeige 1032, eine digitale aktuelle Reichweite 104 und eine digitale Reichweite bei einer geänderten Geschwindigkeit 105. Der digitale Tachometer 1010 wird dargestellt, da eine Geschwindigkeitsanzeige auf Grund gesetzlicher Vorgaben ständig vorhanden sein muss. Die aktuelle Reichweite 104 informiert über die Strecke, die bei aktueller Geschwindigkeit ohne Nachtanken mit dem Fahrzeug noch zurückgelegt werden kann, die Reichweite bei 120km/h 105 informiert über die Strecke, die bei der entsprechenden Geschwindigkeit ohne Nachtanken mit dem Fahrzeug zurückgelegt werden kann. Es ist auch möglich, zusätzlich die Entfernung zu der nächsten Tankstelle und /oder zum Fahrtziel anzugeben. Die Darstellung der Tankanzeige in Figur 3 kann nach einer gewissen Zeit automatisch wieder in die Anzeige nach Figur 2 verändert werden oder wenn der Fahrer seine Blickrichtung ändert.

### Bezugszeichen

100 elektrooptische Anzeige
101 Tachometer
1010 Tachometer digital
102 Drehzahlmesser
103 Tankanzeige
1030 Piktogramm Tankanzeige
1031 Tankanzeige analog
1032 Tankanzeige digital
104 Reichweite aktuell
105 Reichweite bei 120km/h
200 Blickrichtungserkennung
300 A-Säule des Fahrzeugs
400 zweite elektrooptische Anzeige
500 Lenkrad
501 Windschutzscheibe
E Auge des Fahrers
K Kopf des Fahrers
H Hand des Fahrers

## Patentansprüche

1. Anzeigevorrichtung für ein Fahrzeug aufweisend eine elektrooptische Anzeige (100) und eine Positionserkennungsvorrichtung, mittels derer die Position der Augen (E) eines Fahrers des Fahrzeugs ermittelbar ist, wobei mittels der elektrooptischen Anzeige (100) eine Vielzahl von verschiedenen Informationen (101, 1010, 102, 103, 1030, 1031, 1032, 104, 105) darstellbar und von dem Fahrer des Fahrzeugs wahrnehmbar sind, wobei eine Blickrichtungserkennung (200) zur Bestimmung der Blickrichtung des Fahrers vorhanden ist, mit der bestimmbar ist, welche Information (101, 1010, 102, 103, 1030, 1031, 1032, 104, 105) der verschiedenen Informationen (101, 1010, 102, 103, 1030, 1031, 1032, 104, 105) von dem Fahrer wahrnehmbar ist, wobei in Abhängigkeit der wahrgenommenen Information (101, 1010, 102, 103, 1030, 1031, 1032, 104, 105) die wahrgenommene Information (103) vergrößerbar und / oder Zusatzinformationen (104, 105) zu der wahrgenommenen Information (103) darstellbar sind, **dadurch gekennzeichnet, dass** die Anzeigevorrichtung eine zweite elektrooptische Anzeige (400) aufweist, **dass** die zweite elektrooptische Anzeige (400) auf einer A-Säule (300) des Fahrzeugs angeordnet ist, **dass** auf der zweiten elektrooptischen Anzeige (400) die Umgebung hinter der A-Säule (300) des Fahrzeugs darstellbar ist, und **dass** die Blickrichtungserkennung (200) in der A-Säule des Fahrzeuges angeordnet ist.

2. Anzeigevorrichtung nach Patentanspruch 1, **dadurch gekennzeichnet, dass** die Darstellung der Informationen (101, 1010, 102, 103, 1030, 1031, 1032, 104, 105) so verschiebbar und/oder in der Größe veränderbar sind, dass keine Informationen (101, 1010, 102, 103, 1030, 1031, 1032, 104, 105) durch ein Bauteil (500) des Fahrzeugs für den Fahrer verdeckt sind.

3. Anzeigevorrichtung nach einem der vorstehenden Patentansprüche, **dadurch gekennzeichnet, dass** Zusatzinformationen auf der zweiten elektrooptischen Anzeige (400) darstellbar sind.

4. Anzeigevorrichtung nach einem der vorstehenden Patentansprüche,
**dadurch gekennzeichnet, dass** sie eine Sprachausgabeeinheit aufweist oder mit einer Sprachausgabeeinheit verbunden ist.

5. Anzeigevorrichtung nach Patentanspruch 4, **dadurch gekennzeichnet, dass** eine Sprachnachricht erzeugbar und ausgebbar ist, wenn eine bestimmte Blickgeste des Fahrers erkennbar ist.

6. Verfahren zur Anzeige von Informationen auf einer Anzeigevorrichtung in einem Fahrzeug, wobei die Anzeigevorrichtung eine elektrooptische Anzeige (100, 400) und eine Blickrichtungserkennung (200) aufweist, wobei mittels der Blickrichtungserkennung die Position der Augen (E) eines Fahrers des Fahrzeugs ermittelt wird und wobei mittels der elektrooptischen Anzeige (100) eine Vielzahl von verschiedenen Informationen (101, 1010, 102, 103, 1030, 1031, 1032, 104, 105) darstellgestellt werden, so dass sie von dem Fahrer des Fahrzeugs wahrnehmbar sind, wobei die Blickrichtung des Fahrers ermittelt wird und bestimmt wird, welche Information der verschiedenen Informationen (101, 1010, 102, 103, 1030, 1031, 1032, 104, 105) von dem Fahrer wahrgenommen wird, wobei in Abhängigkeit der wahrgenommenen Information (103) die wahrgenommene Information (103) vergrößert und/oder Zusatzinformationen (104, 105) zu der wahrgenommenen Information dargestellt werden, **dadurch gekennzeichnet, dass** die Anzeigevorrichtung eine zweite elektrooptische Anzeige (400) aufweist, **dass** die zweite elektrooptische Anzeige (400) auf einer A-Säule (300) des Fahrzeugs angeordnet ist, **dass** auf der zweiten elektrooptischen Anzeige (400) die Umgebung hinter der A-Säule (300) des Fahrzeugs dargestellt wird, wenn mit der Blickrichtungserkennung erfasst wird, dass die Blickrichtung in Richtung der zweiten elektrooptischen Anzeige gerichtet ist, und **dass** die Blickrichtungserkennung (200) in der A-Säule des Fahrzeuges angeordnet ist.

7. Verfahren nach Patentanspruch 6, **dadurch gekennzeichnet, dass** bei einer Darstellung einer Tankanzeige (103,1031, 1032) die Reichweite der Tankfüllung (104) für die aktuelle Fahrweise angezeigt wird.

8. Verfahren nach Patentanspruch 7, **dadurch gekennzeichnet, dass** die Reichweite der Tankfüllung (105) für mindestens eine alternative Fahrweise angezeigt wird.

9. Verfahren nach Patentanspruch 6, 7 oder 8, **dadurch gekennzeichnet, dass** die Darstellung der Informationen (101, 1010, 102, 103, 1030, 1031, 1032, 104, 105) so verschoben und/oder in der Größe verändert wird, dass keine Informationen durch ein Bauteil (500) des Fahrzeugs für den Fahrer verdeckt sind.

## Claims

1. A display device for a vehicle, having an electro-optical display (100) and a position detection device which can be used to determine the position of the eyes (E) of a driver of the vehicle, wherein a multiplicity of different items of information (101, 1010, 102, 103, 1030, 1031, 1032, 104, 105) can be displayed by means of the electro-optical display device (100) and can be perceived by the driver of the vehicle, wherein a viewing direction detector (200) is provided for determining the driver's viewing direction, which can be used to determine which information (101, 1010, 102, 103, 1030, 1031, 1032, 104, 105) of the various items of information (101, 1010, 102, 103, 1030, 1031, 1032, 104, 105) can be perceived by the driver, wherein, depending on the perceived information (101, 1010, 102, 103, 1030, 1031, 1032, 104, 105), the perceived information (103) can be enlarged and/or additional information (104, 105) relating to the perceived information (103) can be displayed,
**characterised in that** the display device has a second electro-optical display (400), **in that** the second electro-optical display (400) is arranged on an A pillar (300) of the vehicle, **in that** the environment behind the A pillar (300) of the vehicle can be represented on the second electro-optical display (400), and **in that** the gaze direction detection system (200) is arranged in the A pillar of the vehicle.

2. The display device according to claim 1, **characterised in that** the display of the information (101, 1010, 102, 103, 1030, 1031, 1032, 104, 105) can be moved and/or changed in size in such a way that no information (101, 1010, 102, 103, 1030, 1031, 1032, 104, 105) is hidden from the driver by a component (500) of the vehicle.

3. The display device according to any one of the preceding claims, **characterised in that** additional information can be displayed on the second electro-optical display (400).

4. The display device according to any one of the preceding claims, **characterised in that** it has a voice output unit or is connected to a voice output unit.

5. The display device according to claim 4, **characterised in that** a voice message can be generated and output when a specific gaze gesture by the driver can be detected.

6. A method for displaying information on a display device in a vehicle, wherein the display device has an electro-optical display (100, 400) and a viewing direction detector (200), wherein the position of the eyes (E) of a driver of the vehicle is determined by means of the viewing direction detector, and wherein a multiplicity of different items of information (101, 1010, 102, 103, 1030, 1031, 1032, 104, 105) are displayed by means of the electro-optical display device (100) so that they can be perceived by the driver of the vehicle, wherein the driver's viewing direction is calculated, and is determined, which information of the various items of information (101, 1010, 102, 103, 1030, 1031, 1032, 104, 105) is perceived by the driver, wherein, depending on the perceived information (103), the perceived Information (103) is enlarged and/or additional information (104, 105) relating to the perceived information is displayed, **characterized in that** the display device has a second electro-optical display (400), **in that** the second electro-optical display (400) is arranged on an A pillar (300) of the vehicle, **in that** on the second electro-optical display (400) the environment behind the A pillar (300) of the vehicle is represented when the gaze direction detection system detects that the gaze is directed toward the second electro-optical display, and **in that** the gaze direction detection system (200) is arranged in the A pillar of the vehicle.

7. The method according to claim 6, **characterised in that** the range of the fuel level (104) for the current driving style is displayed when a fuel gage (103, 1031, 1032) is displayed.

8. The method according to claim 7, **characterised in that** the range of the fuel level (105) for at least one alternative driving style is displayed.

9. The method according to claim 6, 7 or 8, **characterised in that** the display of the information (101, 1010, 102, 103, 1030, 1031, 1032, 104, 105) is moved and/or changed in size in such a way that no information is hidden from the driver by a component (500) of the vehicle.

## Revendications

1. Dispositif d'affichage pour un véhicule présentant un affichage électro-optique (100) et un dispositif de détection de position au moyen duquel la position des yeux (E) d'un conducteur du véhicule peut être déterminée, dans lequel une pluralité de différentes informations (101, 1010, 102, 103, 1030, 1031, 1032, 104, 105) peuvent être représentées au moyen de l'affichage électro-optique (100) et sont perceptibles par le conducteur du véhicule, dans lequel une détection de direction de regard (200) est prévue pour déterminer la direction de regard du conducteur, au moyen de laquelle il peut être déterminé quelle information (101, 1010, 102, 103, 1030, 1031, 1032, 104, 105) des différentes informations (101, 1010, 102, 103, 1030, 1031, 1032, 104, 105) est perceptible par le conducteur, dans lequel l'information perçue (103) peut être agrandie et/ou des informations supplémentaires (104, 105) relatives à l'information perçue (103) peuvent être représentées en fonction de l'information perçue (101, 1010, 102, 103, 1030, 1031, 1032, 104, 105), **caractérisé en ce que** le dispositif d'affichage présente un second affichage électro-optique (400), **en ce que** le second affichage électro-optique (400) est disposé sur un montant A (300) du véhicule, **en ce que** l'environnement situé derrière le montant A (300) du véhicule peut être représenté sur le second affichage électro-optique (400), et **en ce que** la détection de direction de regard (200) est disposée dans le montant A du véhicule.

2. Dispositif d'affichage selon la revendication 1, **caractérisé en ce que** la représentation des informations (101, 1010, 102, 103, 1030, 1031, 1032, 104, 105) est déplaçable et/ou modifiable en taille de telle sorte qu'aucune information (101, 1010, 102, 103, 1030, 1031, 1032, 104, 105) n'est masquée pour le conducteur par un composant (500) du véhicule.

3. Dispositif d'affichage selon l'une quelconque des revendications précédentes, **caractérisé en ce que** des informations supplémentaires peuvent être représentées sur le second affichage électro-optique (400).

4. Dispositif d'affichage selon l'une quelconque des revendications précédentes, **caractérisé en ce qu'**il présente une unité de sortie vocale ou est relié à une unité de sortie vocale.

5. Dispositif d'affichage selon la revendication 4, **caractérisé en ce qu'**un message vocal peut être généré et émis lorsqu'un geste de regard déterminé du conducteur est détectable.

6. Procédé d'affichage d'informations sur un dispositif d'affichage dans un véhicule, dans lequel le dispositif d'affichage présente un affichage électro-optique (100, 400) et une détection de direction de regard (200), dans lequel la position des yeux (E) d'un conducteur du véhicule est déterminée au moyen de la détection de direction de regard, et dans lequel une pluralité de différentes informations (101, 1010, 102, 103, 1030, 1031, 1032, 104, 105) sont représentées au moyen de l'affichage électro-optique (100), de sorte qu'elles soient perceptibles par le conducteur du véhicule, dans lequel la direction de regard du conducteur est déterminée et il est déterminé quelle information, parmi les différentes informations (101, 1010, 102, 103, 1030, 1031, 1032, 104, 105), est perçue par le conducteur, dans lequel l'information perçue (103) est agrandie et/ou des informations supplémentaires (104, 105) relatives à l'information perçue sont représentées en fonction de l'information perçue (103), **caractérisé en ce que** le dispositif d'affichage présente un second affichage électro-optique (400), **en ce que** le second affichage électro-optique (400) est disposé sur un montant A (300) du véhicule, **en ce que** l'environnement situé derrière le montant A (300) du véhicule est représenté sur le second affichage électro-optique (400) lorsqu'il est détecté au moyen de la détection de direction de regard que la direction de regard est orientée en direction du second affichage électro-optique, et **en ce que** la détection de direction de regard (200) est disposée dans le montant A du véhicule.

7. Procédé selon la revendication 6, **caractérisé en ce que**, lors d'une représentation d'un indicateur de carburant (103, 1031, 1032), l'autonomie correspondant au remplissage de réservoir (104) pour le mode de conduite actuel est affichée.

8. Procédé selon la revendication 7, **caractérisé en ce que** l'autonomie correspondant au remplissage de réservoir (105) pour au moins un mode de conduite alternatif est affichée.

9. Procédé selon la revendication 6, 7 ou 8, **caractérisé en ce que** la représentation des informations (101, 1010, 102, 103, 1030, 1031, 1032, 104, 105) est déplacée et/ou modifiée en taille de telle sorte qu'aucune information ne soit masquée pour le conducteur par un composant (500) du véhicule.
